# EUROPÄISCHE PATENTSCHRIFT

(11) **EP 3 652 357 B1**
(45) Veröffentlichungstag und Bekanntmachung des Hinweises auf die Patenterteilung: **23.06.2021**
(21) Anmeldenummer: 18762459.8
(22) Anmeldetag: 16.08.2018
(51) Int. Cl.: C23C 2/06, B21H 3/02, E04C 3/04, F16B 33/06

(54) **ZUGSTAB MIT DURCH EINE AUFGEROLLTE ZINKSCHICHT KORROSIONSBESTÄNDIGEN GEWINDEFLANKEN UND VERFAHREN ZUR HERSTELLUNG DER GEWINDEFLANKEN**
TENSION MEMBER HAVING CORROSION-RESISTANT THREADED FLANKS AND METHOD TO PRODUCE THE THREADED FLANKS
BARRE DE TRACTION PRÉSENTANT DES FLANCS FILETÉS RÉSISTANT À LA CORROSION ET MÉTHODE DE PRODUCTION DES FLANCS FILETÉS

(30) Priorität: 16.08.2017 DE 202017104918 U
(43) Veröffentlichungstag der Anmeldung: 20.05.2020
(73) Patentinhaber: Pfeifer Holding GmbH & Co. KG, 87700 Memmingen (DE)
(72) Erfinder: FITZ, Christian, 88339 Bad Waldsee (DE)
(74) Vertreter: Hoffmann Eitle
(86) Internationale Anmeldenummer: PCT/EP2018/072268
(87) Internationale Veröffentlichungsnummer: WO 2019/034750

(56) Entgegenhaltungen:
- EP-A2- 3 109 340
- DE-A1- 3 639 532
- DE-U1- 29 711 950
- JP-A- S6 260 854

## Beschreibung

### TECHNISCHES GEBIET

Die vorliegen Erfindung betrifft einen statisch dauerhaft belastbaren Zugstab für ein Bauwerk, der als Rundmaterial ausgebildet ist und an beiden Endabschnitten Gewindeflanken eines Gewindes zur Aufnahme eines Anschlussbauteils aufweist, sowie ein Verfahren zum Herstellen eines solchen Stabs.

### STAND DER TECHNIK

Grundsätzlich ist es bei bisherigen Zugstäben für Bauwerke mit Anschlussgewinden üblich, die Gewindeflanken des Gewindes vor Korrosion zu schützen. Hierzu wird das Gewinde beispielsweise mit Zinkfarbe oder organischem Korrosionsschutz bestrichen, was eine unzureichende Schutzwirkung entfaltet, oder nach der Herstellung des Gewindes verzinkt, was eine Nachbearbeitung des Gewindes zur Wiederherstellung seiner Gängigkeit erforderlich macht. Ein weiteres bekanntes Verfahren beruht auf einem Verzinken des Stabmaterials vor dem Einarbeiten des Gewindes, was jedoch zur Zerstörung des Korrosionsschutzes im Bereich des Gewindes führt und ein nachträgliches Bestreichen mit Zinkfarbe oder beispielsweise einem organischen Korrosionsschutz erforderlich macht, wenn Korrosionsschutz angestrebt ist.

Alle diese aus dem Stand der Technik bekannten Verfahren, die im Folgenden näher ausgeführt werden, haben den Nachteil, dass der Korrosionsschutz des Gewindes eine nicht zufriedenstellende Qualität hat, weil der Korrosionsschutz im Bereich des Gewindes nach seiner Auftragung zumindest teilweise wieder entfernt werden muss oder nur unzureichend aufgetragen werden kann, um die Funktion des Gewindes nicht zu beeinträchtigen.

Außerdem sind die bekannten Verfahren zur Herstellung eines mit korrosionsgeschütztem Gewinde versehenen Zugstabs oder eines ähnlichen Bauteils ineffizient, weil der Prozess des Aufbringens von Korrosionsschutz die vorher und nachher durchzuführenden Fertigungsschritte unterbricht und weil bei einigen Nachbearbeitungsverfahren, beispielsweise beim Gewindeputzen, giftige Dämpfe entstehen, deren Absaugung zusätzliche Anlagen und Aufwendungen erforderlich macht. Beim Gewindeputzen wird die Zinkschicht im Bereich des Gewindes erhitzt, was die giftigen und umweltschädlichen Dämpfe erzeugt, die mit anlagentechnisch großem Aufwand abgesaugt werden müssen.

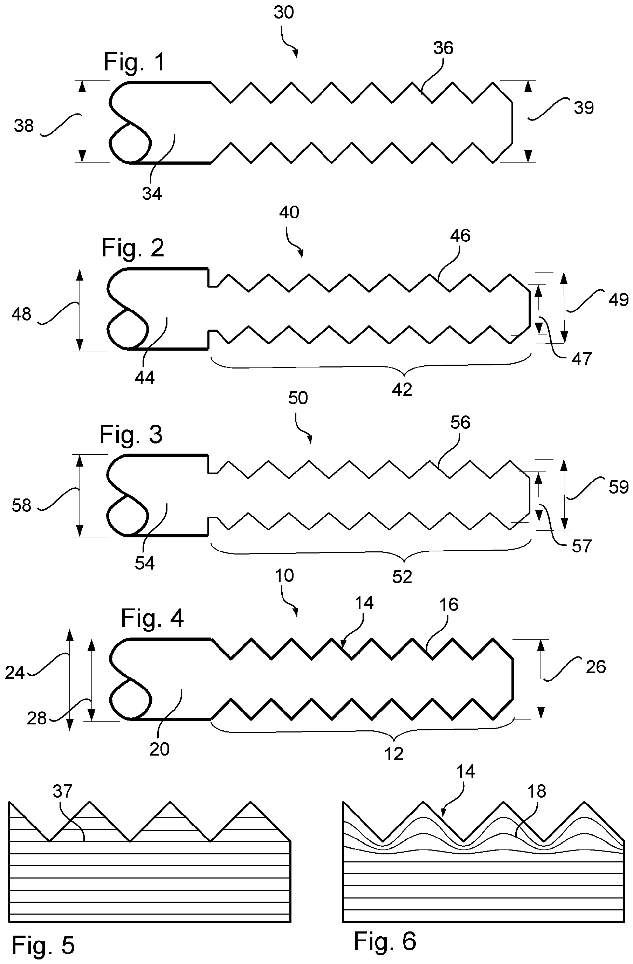

Das Ergebnis eines ersten aus dem Stand der Technik bekannten Verfahrens ist für eine Seite eines Zugstabes in Figur 1 dargestellt. Dort ist ein Zugstab 30 mit einem gewindefreien Abschnitt 34 und einem Endabschnitt abgebildet, in dem Gewindeflanken 36 eines Gewindes zur Aufnahme eines Anschlussbauteils oder eines anderen Elementes ausgebildet sind. Der Zugstab 30 entsteht durch Ablängen eines blanken Grundmaterials, Schneiden des Gewindes, Verzinken des Gewindes und des gewindefreien Teils und Nachbearbeiten des Gewindes.

In Figur 1 sind der Ausgangsdurchmesser 38 und der Gewindedurchmesser 39 gezeigt und es ist zu erkennen, dass das Gewinde im Endabschnitt durch spanende Bearbeitung, nämlich durch Schneiden des Gewindes, entstanden ist.

Nach dem Verzinken ist die erforderliche Nachbearbeitung üblicherweise ein Nachschneiden des Gewindes oder ein Gewindeputzen, um es wieder gängig zu machen. Bei der Nachbearbeitung wird der Großteil der durch das Verzinken aufgebrachten Schutzschicht im Bereich des Gewindes wieder abgetragen, sodass deutlich weniger Zink auf dem Gewinde als auf dem restlichen Stab verbleibt. Folglich ist der Korrosionsschutz eines auf diese Weise hergestellten Zugstabs 30 im Bereich des Gewindes temporär vorhanden, langfristig jedoch wegen der geringeren Schichtdicke unzureichend.

Figur 2 zeigt das Ergebnis einer zweiten aus dem Stand der Technik bekannten Fertigung eines Zugstabs mit Gewinde und Korrosionsschutz. In einem ersten Schritt wird der Zugstab 40 abgelängt, danach im Gewindebereich vorgeschält mit Durchmesser zwischen 47 und 49, danach das Gewinde auf Durchmesser 49 gerollt, d.h. kaltverformt und somit spanlos bearbeitet, danach verzinkt und danach wiederum zur Gängigkeit nachbearbeitet.

Das Vorschälen im Gewindebereich ist in vielen Fällen eine Voraussetzung für das Gewinderollen zur Herstellung eines hochwertigen Gewindes. Hier werden sehr große Genauigkeiten benötigt. Es muss beim Eindringen der Gewinderollen in den geschälten Bereich 47 genau die Menge plastisch hervorgedrückt werden zur Ausprägung der vollen Gewindeflanken 46 außen 49. Nur durch Schälen kann die für das Gewinde zur Verfügung stehende Materialmenge durch Anpassung des Durchmessers des Stabs angepasst werden. Zudem werden mögliche Ungenauigkeiten und Unreinheiten auf der Oberfläche des Rundmaterials entfernt, die sich ansonsten in der empfindlichen Gewindeoberfläche wiederfänden.

Figur 2 zeigt den Zugstab 40 mit einem gewindefreien Teil 44 und einem Endabschnitt 42, auf dem Gewindeflanken 46 eines Gewindes zur Aufnahme eines Anschlussbauteils oder eines anderen Elements vorgesehen sind. Ferner zeigt Figur 2 den Ausgangsdurchmesser 48, den Gewindedurchmesser 49 und den reduzierten Durchmesser 47 des Bauteils. Das Schälen erfolgt auf einen größeren Durchmesser als 47 aber kleiner als 49.

Auch bei dem Verfahren, dessen Resultat in Figur 2 illustriert ist, ist das Nachbearbeiten des Gewindes erforderlich und führt auch in diesem Fall dazu, dass deutlich weniger Zink auf dem Gewinde als auf dem restlichen Stab verbleibt. Auch im zur Figur 2 führenden Verfahren wird das Gewinde nachgeschnitten oder geputzt, um wieder gängig zu werden.

Ein Vorteil des Gewinderollens gegenüber dem Gewindeschneiden, das zur Herstellung des Zugstabs 30 aus Figur 1 eingesetzt wurde, liegt grundsätzlich darin, dass bei der Kaltverformung, also beim Rollen, der Faserverlauf des Materials beibehalten wird, die einzelnen Fasern des Materials also nicht durchtrennt, sondern lediglich umgeformt werden. Dies hat bekanntlich eine höhere Festigkeit des umgeformten Materials zur Folge und führt dazu, dass ein Stab mit gerolltem Gewinde gegenüber einem Stab mit geschnittenem Gewinde im Bereich seines Gewindes eine deutliche bessere dynamische Beanspruchbarkeit aufweist. Allerdings führt ein nachträgliches Verzinken des gerollten Gewindes aufgrund der hiermit einhergehenden Wärmeeinwirkung dazu, dass der positive Effekt aus der Kaltverformung des Gewinderollens, nämlich die bessere Festigkeit wegen des durchgehenden Faserverlaufs, weitestgehend wieder aufgehoben wird.

Auch das Verfahren, das zum Zugstab 40 gemäß Figur 2 führt, ist also hinsichtlich der Korrosionsschutzwirkung des Zinks, der Festigkeit des Gewindes gegenüber dynamischen Beanspruchungen und der Herstellungseffizienz verbesserungsbedürftig.

Figur 3 zeigt das Resultat eines dritten aus dem Stand der Technik bekannten Verfahrens zur Herstellung eines Zugstabs 50. Der Zugstab 50 aus Figur 3 wurde hergestellt durch Verzinken des blanken Grundmaterials mit Durchmesser 58, danach Ablängen des Zugstabs, danach Vorschälen des Gewindebereichs und danach Gewinderollen auf Durchmesser 59 außen und 57 innen. Da im dritten Verfahren zu Beginn verzinkt und danach erst vorgeschält und umgeformt wird, ist das Gewinde komplett ohne Korrosionsschutz ausgebildet. Figur 3 zeigt den Zugstab 50 mit einem gewindefreien Bereich 54 und einem Endabschnitt 52 mit Gewindeflanken 56 eines Gewindes zur Aufnahme eines Anschlussbauteils ohne Korrosionsschutz in Form einer Zinkschicht

Außerdem sind der Ausgangsdurchmesser 58 des Rundstabs, der Gewindeaußendurchmesser 59 und der reduzierte Innen- oder Kerndurchmesser 57 gezeigt. Um hier einen Korrosionsschutz auf dem Endabschnitt 52 mit Gewinde vorzusehen, muss nachträglich beispielsweise ein organischer Korrosionsschutz aufgetragen werden. Alternativ kann das Gewinde mit Zinkfarbe oder einem anderen Korrosionsschutz bestrichen werden, was jedoch erstens einen erheblichen Mehraufwand bei der Herstellung des Zugstabs bedeutet und zweitens eine unzureichende Korrosionsbeständigkeit nach sich zieht.

Aus DE 36 39 532 A1 ist ein Verfahren zur Herstellung von feuerverzinkten Teilen mit Gewinde bekannt. Dieses Dokument und das hierin offenbarte Verfahren bzw. Teil betreffen keine Ausführungsformen eines statisch dauerhaft belastbaren Zugstabs oder Druckstabs für ein Bauwerk im Sinne des obigen technischen Gebiets. Aus diesem Dokument ist eine Gewindespindel, wie sie beispielsweise als Kopf- oder Fußspindel für Deckentische oder Lasttürme bei Baugerüsten Verwendung findet, und eine Baustütze bekannt. Diese Teile zeichnen sich dadurch aus, dass sie aus einem hohlen Stahlrohr bestehen und vorwiegend Druckbelastungen aus Eigengewicht der Hilfskonstruktionen tragen. Diese Stützrohre dienen grundsätzlich ganz anderen Zwecken als statisch dauerhaft belastbare Zugstäbe oder Druckstäbe für ein Bauwerk mit Lebenserwartungshorizonten von 50 Jahren. Während Rohre leicht sein sollen, damit die hieraus erstellten Gerüste schnell und leicht auf- und abgebaut und transportiert werden können, geht es bei statisch dauerhaft belastbaren Zugstäben oder Druckstäben für ein Bauwerk ganz überwiegend um deren Festigkeit über eine lange Lebensdauer, weil der Auf- und Abbau sowie Transport nur ein einziges Mal erfolgen muss.

Die aus DE 36 39 532 A1 bekannten Rohre werden im Gerüstbau oder Schalungsbau eingesetzt und dort nur auf Druck beansprucht. Es handelt sich also nicht um in einem Bauwerk eingesetzte statische Komponenten, sondern um Hilfsgestelle zur Errichtung eines Bauwerks. Sie sind keine statisch tragenden Teile oder Bestandteile eines Bauwerks.

DE 297 11 950 U1 offenbart Zugstab-Anker für Tragwerkskonstruktionen zum Zusammenwirken mit einem Zugstab. Zu diesem Zugstab ist offenbart, dass man im Allgemeinen dazu trachte, beim eingedrehten Zugstab dessen Gewinde nicht über die Schaftstirnfläche des Schaftes des Ankers ragen zu lassen, insbesondere um Korrosionen zu vermeiden.

EP 3 109 340 A2 betrifft verzinkte Schrauben, wobei die Verzinkung als Gleitbeschichtung dient und aufgebracht wird, um ein wiederholtes Ein- und Ausdrehen der Schraube zu ermöglichen. Das Gewinde wird durch Walzen hergestellt, nachdem eine Zinkschicht auf den Rohling aufgebracht wurde.

JP S62 60854 A lehrt ein Verfahren zum Herstellen beispielsweise einer Schraube, bei dem eine wellige Oberfläche nach einem Eintauchen in ein Zinkbad durch Rollen ausgebildet oder nachgeformt wird.

Ein statisch dauerhaft belastbarer Zugstab im Sinne des vorliegenden technischen Gebiets ist Teil eines Zugstabsystems mit großen Spannweiten im Bauwesen für Bauwerke, das für Zugkraftübertragung vorwiegend ausgelegt ist. Es geht im vorliegenden technischen Gebiet also um einen Zugstab in einem System von statisch belastbaren Komponenten in einem Bauwerk mit

Lebenserwartungshorizont von bis zu fünfzig Jahren mit Korrosions- und Ermüdungslasten.

### DARSTELLUNG DER ERFINDUNG

Vor diesem Hintergrund liegt eine Aufgabe der vorliegenden Erfindung darin, einen statisch dauerhaft belastbaren Zugstab für ein Bauwerk bereitzustellen, der einen verbesserten Korrosionsschutz aufweist und gegen dynamische Beanspruchungen (Ermüdung) weniger empfindlich ist. Eine weitere Aufgabe der Erfindung besteht darin, ein Herstellungsverfahren für einen statisch dauerhaft belastbaren Zugstab für ein Bauwerk bereitzustellen, mit dem ein Zugstab hergestellt werden kann, der gegenüber dem Stand der Technik einen besseren Korrosionsschutz aufweist und weniger empfindlich gegen ermüdende dynamische Wechselbeanspruchungen ist, und das effizienter und umweltfreundlicher durchgeführt werden kann als die aus dem Stand der Technik bekannten Fertigungsverfahren.

Die obige Aufgabe wird durch einen statisch dauerhaft belastbaren Zugstab für ein Bauwerk gemäß Anspruch 1 gelöst, der als robustes besonders festes Rundmaterial ausgebildet ist und an beiden Endabschnitten Gewindeflanken eines Gewindes zur Aufnahme eines Anschlussbauteils aufweist. Erfindungsgemäß sind die Gewindeflanken zumindest teilweise mit einer gerollten Zinkoberfläche versehen.

Unter einer "gerollten Zinkoberfläche" ist eine Zinkoberfläche zu verstehen, die gerollt wurde, d.h. kaltverformt, also spanlos bearbeitet wurde, um die Gewindeflanken auszubilden. Die Fasern sind in Figur 6 lastbegleitend angeordnet und nicht durchtrennt wie beim geschnittenen Gewinde in Figur 5. Dies steigert die dynamische Belastbarkeit (Ermüdungswiderstand). Zudem ist der Bereich der Gewindeflanken vollständig von der Zinkschicht umgeben, was der Korrosionslanglebigkeit zu Gute kommt. Eine gerollte Zinkoberfläche grenzt sich also von einer geschnittenen Zinkoberfläche, bei der in eine Zinkoberfläche geschnitten wurde, und auch von einer Zinkoberfläche ab, die nachträglich auf ein gerolltes Gewinde aufgebracht wurde. Zwar ist dann der Bereich zinkgeschützt, aber die lastragenden Fasern sind darunter durchschnitten, was sich dynamischen Belastungen gegenüber schlechter verhält. Insbesondere ein Gewinde aus einem verzinkten, im Bereich des Gewindes vorgeschälten und gerollten Rohmaterials, das nach der Kaltverformung feuerverzinkt wurde, weist aufgrund der unterschiedlichen Faserverläufe in der Zinkschicht keine "gerollte Zinkoberfläche" auf.

Durch die gerollte Zinkoberfläche, d.h. eine bereits bestehende Zinkoberfläche, die anschließend durch Rollen (Kaltverformen) bearbeitet wurde, kann ein deutlich verbesserter Korrosionsschutz erreicht werden, weil die Oberfläche nach dem Rollen, d.h. dem Ausbilden des Gewindes, nicht nachbearbeitet werden muss. Denn die durch das Rollen dem Gewinde aufgeprägte Form ist die gewünschte Form des Gewindes in der Endtoleranz ohne Nacharbeitung wie Putzen und damit nachträglicher Schädigung. Gerade das bei nachträglicher Zinkbeschichtung notwendige Nachbearbeiten führt bei den Verfahren aus dem Stand der Technik zu einer ehrblichen Reduktion der Korrosionsschutzwirkung des Zinks im Bereich des Gewindes. Ferner ermöglicht die Kaltverformung der Zinkschicht die Erhaltung der positive Effekte aus der Kaltverformung im Hinblick auf Ermüdungsbeanspruchung. Diese positiven Effekte werden, anders als bei den bisher bekannten Verfahren mit nachträglichem Wärmeeintrag (Feuerverzinken), nicht wieder rückgängig gemacht oder teilweise aufgehoben, sondern kommen vollständig zur Geltung.

Der erfindungsgemäße statisch dauerhaft belastbare Zugstab für ein Bauwerk kann nach dem folgenden Verfahren hergestellt werden. Ein erfindungsgemäßes Verfahren zur Fertigung eines statisch dauerhaft belastbaren Zugstabs für ein Bauwerk gemäß Anspruch 4 umfasst unter anderem ein Bereitstellen eines Rundmaterials, Aufbringen einer Zinkschicht zur Erzeugungen einer Zinkoberfläche und spanloses Umformen bevorzugt durch Rollen zumindest eines Endabschnitts zur Erstellung von Gewindeflanken eines Gewindes zur Aufnahme eines Anschlussbauteils.

Durch dieses Verfahren wird die Fertigung gegenüber den aus dem Stand der Technik bekannten Verfahren erheblich verbessert, weil der Fertigungsprozess so schlanker und effizienter organisiert werden kann. Dies liegt insbesondere daran, dass die Stäbe die Fertigung in einem Zug durchlaufen können und der Fertigungsvorgang nicht durch Verzinken, Gewindeschneiden und/oder Gewindeputzen unterbrochen werden muss. Darüber hinaus entfällt aufgrund des Wegfallens der Gewindenachbearbeitung und insbesondere des Gewindeputzens das Erfordernis, dabei entstehende giftige Dämpfe in der Produktion abzusaugen.

Aus diesen Gründen ist das erfindungsgemäße Verfahren besonders effizient.

Erfindungsgemäß wird das spanlose Umformen der beiden Endabschnitte zur Erstellung von Gewindeflanken eines Gewindes zur Aufnahme eines Anschlussbauteils durch ein drehendes Werkzeug oder mehrere drehende Werkzeuge, durchgeführt, dem sogenannten Gewinderollen, während sich der Zugstab, also das Werkstück, nicht dreht. Bei den großen Dimensionen eines statisch dauerhaft belastbaren Zugstabs für ein Bauwerk im Sinne des vorliegenden technischen Gebiets ist es besonders vorteilhaft, einen Werkzeugkopf um das stehende oder nur linear vorgeschobene Teil rollen zu lassen, um den Endabschnitt oder die Endabschnitte umzuformen.

Alternativ, aber nicht erfindungsgemäß, kann auch das Teil in einem stehenden Werkzeug gedreht werden, was aber wegen der Länge des Zugstabs nachteilig ist, weil diese Vorgehensweise zu Problemen bei der präzisen Lagerung des Stabs und bei der Vermeidung von Unwucht führt.

Der Zugstab ist als Rundmaterial ausgebildet. Das bedeutet, dass der Zugstab mit einem runden Querschnitt versehen und massiv, also nicht als hohles Rohr, ausgebildet ist. Der Zugstab ist aus höherfestem Stahl, weiter bevorzugt aus Feinkornstahl ausgebildet.

Die Ausbildung des Zugstabs als höherfestes feinkörniges Stahlrundmaterial hat hinsichtlich seiner Fertigung, Festigkeit und der Ausbildung der Gewindeflanken des Gewindes Vorteile.

In einer bevorzugten Ausführungsform ist die Zinkoberfläche abtragungsfrei gerollt. Dies bedeutet, dass die Zinkoberfläche während des Umformens beispielsweise des Rundmaterials zum Gewinde nicht abgetragen wird, sondern insgesamt spanlos umgeformt wird. Darüber hinaus bedeutet dieses vorteilhafte Merkmal, dass die Zinkoberfläche auch nach dem Rollen nicht abgetragen wurde, beispielweise durch Gewindeschneiden oder Gewindeputzen. Die Zinkpartikel werden eher in die Oberfläche der Gewindeflanken eingearbeitet und verbleiben dort dauerhaft ohne beim Schrauben abzuplatzen.

Der Zugstab weist an beiden Endabschnitten Gewindeflanken eines Gewindes zur Aufnahme eines Anschlussbauteils auf. Hierdurch kann der Zugstab an beiden Enden leicht mit einem entsprechenden Anschlussbauteil verbunden werden.

Bevorzugt weist der Zugstab einen durchgängigen Faserverlauf im Grundmaterial im Endabschnitt oder in den Endabschnitten und bevorzugt auch zwischen seinen beiden Endabschnitten auf. Ein durchgängiger Faserverlauf, wie er beim Kaltverformen, d.h. dem Rollen des Gewindes, üblicherweise entsteht, führt zu erhöhter Festigkeit gegen dynamische Beanspruchungen und ermüdet daher weniger schnell. Dieses Merkmal ist gleichzeitig ein Hinweis darauf, dass nach dem Kaltverformen, d.h. nach dem Gewinderollen, keine nennenswerte Wärmebehandlung des Endabschnitt und bevorzugt auch des Bereichs zwischen den beiden Endabschnitten stattgefunden hat.

Ein erfindungsgemäßer statisch dauerhaft belastbarer Zugstab für ein Bauwerk ist durch Bereitstellen eines Rundmaterials, Aufbringen einer Zinkschicht zur Erzeugung einer Zinkoberfläche und spanloses Umformen beider Endabschnitte zur Erstellung von Gewindeflanken eines Gewindes zur Aufnahme eines Anschlussbauteils herstellbar. Ein solcher Zugstab löst die obige Aufgabe und ermöglicht insbesondere auch die Herstellung durch ein besonders effizientes Verfahren.

Das Rundmaterial kann dabei entweder im bereits gewünschten Durchmesser zur Verfügung gestellt werden oder über seine komplette Länge, mindestens jedoch über den Endabschnitt, an dem die Gewindeflanken des Gewindes hergestellt werden sollen, vorgeschält werden, so dass nach dem anschließenden Aufbringen der Zinkschicht der Durchmesser unter Beachtung der vorgegebenen Toleranzen die Fertigung eines maßhaltigen Gewindes auf der Rollmaschine ermöglicht und die Oberflächenqualität des Rundmaterials besonders hoch ist.

Bei dieser Vorgehensweise wird nicht die Zinkschicht abgetragen, sondern das Rundmaterial vor dem Aufbringen der Zinkschicht, und die Zinkschicht wird gemeinsam mit dem Stabmaterial umgeformt. So lässt sich ein Gewinde fertigen, das anders als im Stand der Technik im Gewindebereich nicht nachbearbeitet werden muss. Gleichzeitig ist ein sehr zuverlässiger Korrosionsschutz im Bereich des Gewindes ausgebildet und die Festigkeit des Gewindes im Hinblick auf Ermüdungsbeanspruchung und dynamische Beanspruchung ist durch das Umformen besonders groß.

Gemäss der Erfindung ist der Zugstab durch spanloses Umformen beider Endabschnitte zur Erstellung von Gewindeflanken jeweils eines Gewindes zur Aufnahme eines Anschlussbauteils herstellbar.

Das entsprechende erfindungsgemässe Verfahren umfasst ein spanloses Umformen beider Endabschnitte zur Herstellung von Gewindeflanken jeweils eines Gewindes zur Aufnahme eines Anschlussbauteils.

Hierdurch kann der Zugstab an beiden Enden mit einem Anschlussbauteil verbunden werden und das hierfür eingesetzte Gewinde erfüllt die hohe Qualität im Hinblick auf Korrosionsschutz, Festigkeit und Herstellungseffizienz.

Das entsprechende Fertigungsverfahren des Zugstabs dieser erfindungsgemässen Ausführungsform sieht also vor, dass nach dem Umformen zur Herstellung der Gewindeflanken kein Schritt des Verzinkens, insbesondere kein Schritt des Feuerverzinkens, am Zugstab durchgeführt wird.

Hierdurch kann eine Gewindenachbearbeitung, bei der die Zinkschicht zumindest teilweise wieder abgetragen würde, vermieden werden. Außerdem kann so der durchgehende Faserverlauf im Bereich des Endabschnitts und damit der Gewindeflanken und der durch das spanlose Umformen erzielte Festigkeitseffekt beibehalten werden.

Bevorzugt ist die Zinkoberfläche des Zugstabs feuerverzinkt.

Der Schritt des Aufbringens einer Zinkschicht umfasst also bevorzugt einen Schritt des Feuerverzinkens der Oberfläche des Rundmaterials, um so die Zinkoberfläche bereitzustellen, bevor diese spanlos umgeformt, d.h. gerollt wird.

Die Gewindeflanken sind zumindest abschnittsweise gegenüber einem gewindefreien Teil des Zugstabs erhaben. Diese Ausgestaltung grenzt sich insbesondere von solchen Ausführungsformen ab, die durch Vorschälen nur des Gewindebereichs, nicht des gewindefreien Teils, und damit eine selektive Reduzierung des Durchmessers des Stabs im Endabschnitt vor der Aufbringung des Gewindes erzeugt wurden.

Der Gewindedurchmesser ist also größer als der Durchmesser des Zugstabs im gewindefreien Bereich.

Der Zugstab lässt sich dadurch fertigen, dass das Rundmaterial anfangs über seine komplette Länge so vorgeschält oder maßgezogen wird oder durch andere Verfahren bereits einen hierfür passenden Durchmesser aufweist, dass der Durchmesser nach dem Aufbringen der Zinkschicht die Fertigung eines maßhaltigen Gewindes auf der Rollmaschine ermöglicht.

In einer bevorzugten Ausführungsform des Zugstabs ist die Oberfläche des Zugstabs vor der Gewindeherstellung durch Rollen vollständig oder bis auf ihre Stirnfläche vollständig mit Zink versehen. Diese bevorzugte Ausführungsform lässt sich insbesondere dadurch erzielen, dass das Rundmaterial des Zugstabs zunächst verzinkt wird, bevor er spanlos umgeformt wird, um die Gewindeflanken im Endabschnitt auszubilden. Gegebenenfalls wird das Ausgangsmaterial, beispielsweise ein blankes Rundmaterial, nach dem Verzinken und vor dem Gewinderollen abgelängt d.h. seine Länge durch Abschneiden eingestellt. Beim Ablängen, d.h. beim Abschneiden einer bestimmten Länge des verzinkten und ggf. vorgeschälten Grundmaterials entsteht eine nicht verzinkte Stirnfläche, die ggf. nachträglich mit einem Korrosionsschutz versehen werden kann, diesen jedoch nicht notwendigerweise aufweisen muss. Da das Stirnende zu der lastabgewandten Seite des Gewindeendes des Zugstabes hin orientiert ist, spielt dort ein leichter späterer Korrosionsangriff keine statisch tragende Rolle. Innerhalb der Gewindelänge und auch am Zugstab selbst muss daher ein Zinkschutz gegen Korrosion vorhanden sein.

Die Zinkoberfläche oder das Zink des Zugstabs ist als Oberflächenschutz gegen Korrosion ausgebildet. Mit anderen Worten ist die Zinkoberfläche oder das Zink so ausgebildet, dass sie oder es einen wirksamen Schutz der Oberfläche insbesondere gegen Korrosion darstellt. Dies erfordert insbesondere eine geschlossene und vollständige Beschichtung des zu schützenden Teils der Oberfläche in einer ausreichenden Dicke, was im Stand der Technik im Bereich der Gewinde nicht erfüllt ist.

Der Zugstab der vorliegenden Offenbarung kann insbesondere in einem System eingesetzt werden, wie es in der Gebrauchsmusteranmeldung DE 20 2017 104 917.5 und der internationalen Patentanmeldung PCT/EP2018/071757 der vorliegenden Anmelderin beschrieben ist, die unter dem Titel "System aus statisch belastbaren Komponenten in einem Bauwerk" eingereicht wurde.

Die Erfindung betrifft somit auch ein System aus zumindest zwei Zugstäben gemäß Anspruch 9, wobei die Gewinde jeweils zumindest eines Endabschnitts der zumindest zwei Zugstäbe dieselbe Gewindetragfähigkeit aufweisen und eine jeweilige Grenzzugkraft der zumindest zwei Zugstäbe oder Druckstäbe bestimmen.

Da die Gewindeflanken zumindest teilweise mit einer gerollten Zinkoberfläche versehen sind, können die Gewinde besonders zuverlässig ausgebildet werden, so dass es besonders effizient und gleichzeitig präzise möglich ist, die Gewindetragfähigkeit der Zugstäbe gleich groß zu bemessen.

Weitere Merkmale und Vorteile der Erfindung ergeben sich aus der Gesamtheit der Ansprüche und der nachfolgenden Figurenbeschreibung.

### KURZE FIGURENBESCHREIBUNG

Figur 1 zeigt einen Zugstab aus dem Stand der Technik gemäß einem ersten bekannten Herstellungsverfahren.
Figur 2 zeigt einen Zugstab aus dem Stand der Technik gemäß einem zweiten bekannten Herstellungsverfahren.
Figur 3 zeigt einen Zugstab aus dem Stand der Technik gemäß einem dritten bekannten Herstellungsverfahren. Die Zinkschicht ist im Gewindebereich entfernt.
Figur 4 zeigt einen Zugstab gemäß der Erfindung mit Schälen auf Solldurchmesser mit Durchmesser 28. Im Endbereich 12 ist das aufgerollte Gewinde dargestellt. Die Gewindeflanken 14 haben den Außendurchmesser 26, der größer als der Schaldurchmesser 28 ist. Sie tragen eine durchgängige maßhaltige Zinkschicht 16 intensiv mit dem Stahl verbunden oder sogar in den Stahl eingearbeitet.
Figur 5 zeigte eine schematische Schnittansicht eines durchtrennten Faserverlaufs bei einem geschnittenen Gewinde.
Figur 6 zeigt eine schematische Schnittansicht eines kontinuierlichen Faserverlaufs bei einem gerollten Gewinde mit einer bevorzugt kontinuierlichen Zinkschicht auf dem Faserverlauf.

### WEGE ZUR AUSFÜHRUNG DER ERFINDUNG

Figur 4 zeigt eine bevorzugte Ausführungsform eines Zugstabs 10 für ein Bauwerk, der an zumindest einem Endabschnitt 12 Gewindeflanken 14 eines Gewindes zur Aufnahme eines Anschlussbauteils aufweist. Die Gewindeflanken 14 sind hier vollständig mit einer gerollten Zinkoberfläche 16 versehen.

Wie im Vergleich der Figuren 5 und 6 illustriert ist, unterscheiden sich geschnittene Gewinde, d.h. Gewinde, die durch spanende Bearbeitung erzeugt wurden, von gerollten Gewinden, also solchen Gewinden, die durch spanlose Bearbeitung, Kaltverformung erzeugt wurden. Figur 6 zeigt einen durchgehenden Faserverlauf 18 im Material, aus dem die Gewindeflanken 14 erzeugt wurden. Dieser durchgehende Faserverlauf 18 bedeutet, dass die Fasern des Materials durch die Formgebung der Gewindeflanken 14 nicht unterbrochen, sondern umgeformt wurden. Demgegenüber ist bei einem geschnittenen Gewinde ein unterbrochener Faserverlauf 37 zu erkennen. Durch das Gewindeschneiden wird die Form des Gewindes einfach durch spanenden Abtrag von Material erzeugt, wodurch die einzelnen Fasern des Grundmaterials unterbrochen werden. Hierdurch wird die Festigkeit des Grundmaterials im Gegensatz zum durchgehenden Faserverlauf 18 aus Figur 6 herabgesetzt. Beim Rollen dringt die Gewinderollwalze in die Stahloberfläche ein und verdrängt dabei Material, das dann neben der Rille hervorquillt und die äußere Gewindeflanke bildet, sofern der Schäldurchmesser und das Werkzeug präzise aufeinander abgestimmt sind. Insbesondere aus diesem Grund ist ein gerolltes Gewinde widerstandsfähiger gegen dynamische Beanspruchungen und ermüdet somit weniger schnell.

Figur 4 zeigt neben dem Endabschnitt 12 einen gewindefreien Teil 20 des Zugstabs 10, der kontinuierlich in die Gewindeflanken 14 im Endabschnitt 12 übergeht. Mit anderen Worten besteht keine abrupte Durchmesserverjüngung vom gewindefreien Teil 20 zum Endabschnitt 12, wie sie insbesondere in den Figuren 2 und 3 illustriert ist, bei denen der Gewindebereich vor dem Gewinderollen abgeschält wurde, um ein maßhaltiges Gewinde zu ermöglichen.

Die in Figur 4 gezeigte Ausführungsform des Zugstabs 10 wurde durch Vorschälen des originären Rundmaterials über seine komplette Länge vorbereitet, so dass nach dem Aufbringen der Zinkschicht zur Herstellung der Zinkoberfläche 16 der Durchmesser unter Beachtung der vorgegebenen Toleranzen die Fertigung des maßhaltigen Gewindes auf der Rollmaschine ermöglicht. Die die Zinkoberfläche 16 bildende Zinkschicht wird hierbei also nicht abgetragen, sondern nach dem optionalen Vorschälen aufgebracht und dann gemeinsam mit dem Stabmaterial umgeformt.

Aus diesem Grund ist der Ausgangsdurchmesser 24 auch im gewindefreien Teil 20 auf den vorgeschälten, reduzierten Durchmesser 28 verringert worden, der zur Fertigung des Gewindes mit dem Gewindedurchmesser 26 genutzt wurde. Es ist jedoch grundsätzlich auch möglich, dass der Zugstab 10 nicht über seine gesamte Länge vorgeschält wird, sondern nur im Bereich des Gewindes, sofern erst nach dem Vorschälen und vor dem Umformen die Zinkschicht aufgebracht wird. Der Durchmesser 26 ist stets größer als der Schäldurchmesser 28.

Die Stirnseite 22 des Zugstabs 10 in der Figur 4 gezeigten Ausführungsform ist vorzugsweise mit einem organischen oder anderen Korrosionsschutz versehen, kann jedoch auch ohne Korrosionsschutz ausgebildet sein.

Durch die obigen beschriebenen bevorzugten Ausführungsformen werden ein Zugstab für ein Bauwerk bereitgestellt, der einen gegenüber dem Stand der Technik verbesserten Korrosionsschutz bei gleichzeitig verbesserter Festigkeit im Hinblick auf Ermüdungsbeanspruchung und dynamische Beanspruchungen aufweist und effizienter hergestellt werden kann.

## Patentansprüche

1. Statisch dauerhaft belastbarer Zugstab (10) für ein Bauwerk, der an beiden Endabschnitten (12) Gewindeflanken (14) eines Gewindes zur Aufnahme eines Anschlussbauteils aufweist,
**dadurch gekennzeichnet, dass**
der Zugstab als massives Rundmaterial aus höherfestem Stahl ausgebildet ist,
wobei die Gewindeflanken (14) zumindest abschnittsweise gegenüber einem gewindefreien Teil (20) des Zugstabs (10) erhaben und zumindest teilweise mit einer gerollten als Korrosionsschutz ausgebildeten Zinkoberfläche (16) versehen sind.

2. Zugstab (10) nach Anspruch 1, wobei die Zinkoberfläche abtragungsfrei gerollt ist.

3. Zugstab (10) nach Anspruch 1 oder 2, der einen durchgängigen Faserverlauf (18) im Grundmaterial in dem Endabschnitt (12) und bevorzugt auch zwischen seinen beiden Endabschnitten (12) aufweist.

4. Verfahren zum Herstellen eines statisch dauerhaft belastbaren Zugstabs (10) für ein Bauwerk, der an beiden Endabschnitten (12) Gewindeflanken (14) eines Gewindes zur Aufnahme eines Anschlussbauteils aufweist,
wobei der Zugstab als massives Rundmaterial aus höherfestem Stahl ausgebildet ist,
wobei die Gewindeflanken (14) zumindest abschnittsweise gegenüber einem gewindefreien Teil (20) des Zugstabs (10) erhaben und zumindest teilweise mit einer gerollten als Korrosionsschutz ausgebildeten Zinkoberfläche (16) versehen sind, nach einem der vorhergehenden Ansprüche,
wobei das Verfahren die folgenden Schritte umfasst:
Bereitstellen des Rundmaterials mit Solldurchmesser zum späteren Rollen oder knapp darunter, danach
Aufbringen einer Zinkschicht zur Erzeugung der Zinkoberfläche und danach
spanloses Umformen der beiden Endabschnitte zur Erstellung der Gewindeflanken (14),
wobei das Umformen durch ein drehendes Werkzeug oder mehrere drehende Werkzeuge durchgeführt wird, während sich der Zugstab nicht dreht.

5. Verfahren nach Anspruch 4, das kein Verzinken, insbesondere Feuerverzinken, nach dem Umformen zur Erstellung der Gewindeflanken (14) umfasst.

6. Zugstab (10) für ein Bauwerk, der durch ein Verfahren nach einem der Ansprüche 4 und 5 herstellbar ist.

7. Zugstab (10) nach einem der Ansprüche 1 bis 3 oder 6, wobei die Zinkoberfläche feuerverzinkt ist.

8. Zugstab (10) nach einem der Ansprüche 1 bis 3, 6 oder 7, wobei die Oberfläche des Zugstabs (10) vollständig oder bis auf ihre Stirnflächen (22) vollständig mit Zink versehen ist.

9. System aus zumindest zwei Zugstäben (10) nach einem der Ansprüche 1 bis 3 oder 6 bis 8, wobei die Gewinde jeweils zumindest eines Endabschnitts der zumindest zwei Zugstäbe (10) dieselbe Gewindetragfähigkeit aufweisen und eine jeweilige Grenzzugkraft der zumindest zwei Zugstäbe (10) bestimmen.

## Claims

1. Statically permanently loadable tension member (10) for a structure, comprising thread flanks (14) of a thread on both end portions (12) for receiving a connection component,
**characterised in that**
the tension member is designed as solid round stock consisting of high-strength steel,
wherein the thread flanks (14) are raised at least in portions with respect to a non-threaded part (20) of the tension member (10) and are provided at least in part with a rolled zinc surface (16) designed as corrosion protection.

2. Tension member (10) according to claim 1, wherein the zinc surface is rolled without ablation.

3. Tension member (10) according to 1 or 2, comprising a continuous grain flow (18) in the base material in the end portion (12) and preferably also between both end portions (12).

4. Method for producing a statically permanently loadable tension member (10) for a structure, comprising thread flanks (14) of a thread on both end portions (12) for receiving a connection component,
wherein the tension member is designed as solid round stock consisting of high-strength steel,
wherein the thread flanks (14) are raised at least in portions with respect to a non-threaded part (20) of the tension member (10) and are provided at least in part with a rolled zinc surface (16) designed as corrosion protection, according to any of the preceding claims,
wherein the method comprises the following steps:
providing the round stock with a desired diameter for subsequent rolling or just below, then
applying a zinc layer in order to create the zinc surface and then
shaping the two end portions without cutting in order to create the thread flanks (14),
wherein the shaping is carried out by means of a rotating tool or a plurality of rotating tools while the tension member is not rotating.

5. Method according to claim 4, comprising no zinc plating, in particular hot-dip zinc coating, after shaping to create the thread flanks (14).

6. Tension member (10) for a structure, which can be produced by means of a method according to any of claims 4 and 5.

7. Tension member (10) according to any of claims 1 to 3 or 6, wherein the zinc surface is hot-dip zinc coated.

8. Tension member (10) according to any of claims 1 to 3, 6 or 7, wherein the surface of the tension member (10) is completely provided with zinc or completely except for the end faces (22).

9. System consisting of at least two tension members (10) according to any of claims 1 to 3 or 6 to 8, wherein the threads of in each case at least one end portion of the at least two tension members (10) have the same thread load capacity and determine a relevant limit tensile force of the at least two tension members (10).

## Revendications

1. Barre de traction (10) à charge statique permanente pour un ouvrage, qui présente aux deux sections d'extrémité (12) des flancs filetés (14) d'un filetage pour recevoir une pièce de raccordement,
**caractérisée en ce que**
la barre de traction est réalisée en tant que matériau rond solide en acier à haute résistance,
dans laquelle les flancs filetés (14) sont surélevés au moins par sections par rapport à une partie non filetée (20) de la barre de traction (10) et sont pourvus au moins partiellement d'une surface de zinc laminé (16) réalisée en tant que protection anticorrosion.

2. Barre de traction (10) selon la revendication 1, dans laquelle la surface de zinc est laminée sans enlèvement.

3. Barre de traction (10) selon la revendication 1 ou 2, qui présente un fibrage continu (18) dans le matériau de base dans la section d'extrémité (12) et de préférence également entre ses deux sections d'extrémité (12).

4. Procédé de fabrication d'une barre de traction (10) à charge statique permanente pour un ouvrage, qui présente aux deux sections d'extrémité (12) des flancs filetés (14) d'un filetage pour recevoir une pièce de raccordement,
dans lequel la barre de traction est réalisée en tant que matériau rond solide en acier à haute résistance,
dans lequel les flancs filetés (14) sont surélevés au moins par sections par rapport à une partie non filetée (20) de la barre de traction (10) et sont pourvus au moins partiellement d'une surface de zinc laminé (16) réalisée en tant que protection anticorrosion, selon l'une quelconque des revendications précédentes,
dans lequel le procédé comprend les étapes suivantes :
fourniture du matériau rond avec diamètre de consigne pour un laminage ultérieur ou juste en dessous, puis
application d'une couche de zinc pour créer la surface de zinc et ensuite
formage sans copeaux des deux sections d'extrémité pour produire les flancs filetés (14),
dans lequel le formage est effectué par un ou plusieurs outils rotatifs pendant que la barre de traction ne tourne pas.

5. Procédé selon la revendication 4, qui ne comprend pas de galvanisation, en particulier de galvanisation à chaud, après le formage pour produire les flancs filetés (14).

6. Barre de traction (10) pour un ouvrage, qui peut être produite par un procédé selon l'une quelconque des revendications 4 et 5.

7. Barre de traction (10) selon l'une quelconque des revendications 1 à 3 ou 6, dans laquelle la surface de zinc est galvanisée à chaud.

8. Barre de tension (10) selon l'une quelconque des revendications 1 à 3, 6 ou 7, dans laquelle la surface de la barre de tension (10) est entièrement revêtue de zincou entièrement revêtue de zinc à l'exception de ses faces avant (22).

9. Système d'au moins deux barres de traction (10) selon l'une quelconque des revendications 1 à 3 ou 6 à 8, dans lequel les filetages respectivement d'au moins une section d'extrémité des au moins deux barres de traction (10) présentent la même capacité de support de filetage et déterminent une force de traction limite respective des au moins deux barres de traction (10).
